# EUROPEAN PATENT SPECIFICATION

(11) **EP 2 124 393 B1**
(45) Date of publication and mention of the grant of the patent: **25.02.2015**
(21) Application number: 07721154.8
(22) Date of filing: 16.05.2007
(51) Int. Cl.: H04L 12/403, H04L 12/46

(54) **AN ETHERNET AUTOMATIC PROTECTION METHOD AND SYSTEM**
AUTOMATISCHES ETHERNET-SCHUTZVERFAHREN UND SYSTEM
SYSTÈME ET PROCÉDÉ DE PROTECTION AUTOMATIQUE ETHERNET

(30) Priority: 14.02.2007 CN 200710063944
(43) Date of publication of application: 25.11.2009
(73) Proprietor: ZTE Corporation, Shenzhen City, Guangdong Province 518057, (CN)
(72) Inventor: QU, Yanfeng, Shenzhen City Guangdong Province 518057 (CN); FAN, Chengfa, Shenzhen City Guangdong Province 518057 (CN)
(74) Representative: Zerbi, Guido Maria
(86) International application number: PCT/CN2007/001581
(87) International publication number: WO 2008/098431

(56) References cited:
- EP-A1- 1 575 221
- EP-A1- 1 729 453
- CN-A- 1 747 439
- CN-A- 1 909 496
- US-B1- 6 766 482
- SHAH M YIP EXTREME NETWORKS S: "Extreme Networks' Ethernet Automatic Protection Switching (EAPS) Version 1", 20031001; 20031000, 1 October 2003 (2003-10-01), XP015009401,

## Description

### Technical Field

The present invention relates to data communication network, and more specifically, to an Ethernet automatic protection method and system.

### Background Art

RFC3619 defines an Ethernet Automatic Protection Switching (EAPS) method to solve the problem that network breakdown has slow convergence when the Ethernet equipment is in ring network topology and to make the convergence time within 50ms. EAPS ring consists of several connected nodes, each ring has several EAPS Domains, and each Domain can define its master node and transmission nodes, a group of Virtual Local Area Networks (VLAN) belonging to a certain EAPS Domain for forwarding user data, and control VLAN for forwarding EAPS message. For a specific EAPS Doman, the master node blocks the service VLAN of one port to ensure that the service VLAN will not form a ring, thus avoiding the "broadcasting storm" caused by the ring.

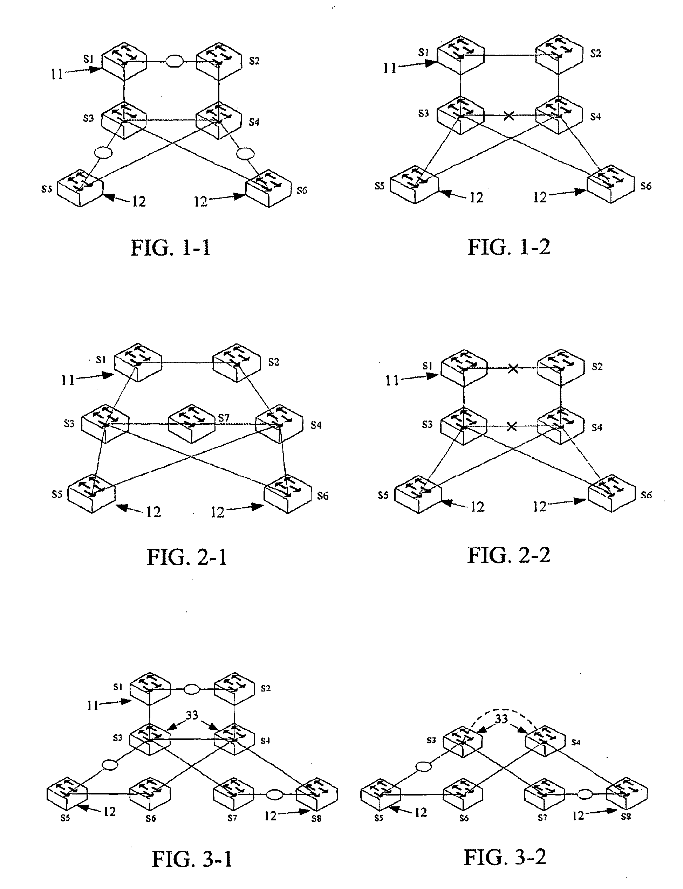

EAPS solves the problem of slow convergence of the single ring network. However, the practical networking is relatively complicated and there may be several interworking rings, FIG. 1-1 shows the topology of several interworking EAPS rings, in which S1, S2, S3, S4 form ring 1 and S1 is the master node 11 of the master ring; S3, S4 and S5 form ring 2 and S5 is the master node 12 of the slave ring; S3, S4 and S6 form ring 3 and S6 is the master node 12 of the slave ring. In normal conditions, the service VLAN between S1 and S2 in ring 1 is blocked, so as the service VLAN between S5 and S3 in ring 2, and the service VLAN between S6 and S4 in ring 3. Suppose the link between S3 and S4 breaks down, the three master nodes in ring 1, ring 2 and ring 3 will perform protection switching to unblock the related service VLAN after detecting the above breakdown, meanwhile, S1, S2, S3, S4, S5 and S6 form several close loops in network, as shown in FIG. 1-2, which will cause "broadcasting storm", thus inducing network paralysis.

EP 1729453 A1 discloses a method for protection switching in a data network including at least two rings (ERA, ERB) with a shared span (SP2,3) and a plurality of nodes (1-4).

Chinese Patent No. CN1747439A, with the title of "A method to solve the breakdowns in tangent rings in Ethernet network automatic protection system" disclosed a solution, in which one ring is selected from several EAPS tangent rings as the master ring, while the others are the slave rings, each ring has a master node, and when the interworking nodes detect a breakdown in shared direct interconnection link, different alarm notifications are respectively sent to the master ring and slave rings, then the master node of the master ring performs protection switching, while the master nodes of the slave rings shield themselves and no corresponding protection switching is performed. After the shielding, the ring detection message of the master nodes of the slave rings performs big ring detection through the master ring links.

Although this method can improve the breakdown-tolerant capability of the EAPS tangent rings to a certain extent, it has the following restrictions:
1) In this method, two or more links including the shared link in the master ring should not simultaneously break down, for example, if the link between S1 and S2 and the link between S3 and S4 of the master ring in the network shown in FIG. 1-1 break down at the same time, as shown in FIG. 2-2, the master nodes S5 and S6 of slave rings will perform protection switching, meanwhile, the network is a closed ring formed by S3, S4, S5 and S6, inducing "broadcasting storm", thus making the network unusable.
2) The link between the tangent nodes should be a shared direct interconnection link rather than a shared indirect interconnection link, for example, when node S7 is added between S3 and S4 in the shared direct interconnection link shown in FIG. 1-1, as shown in FIG. 2-1, if S7 breaks down and the forwarding stops, this breakdown cannot be detected by interworking nodes S3 and S4, and this method is ineffective.
3) Because of the shielding effect of the master nodes of slave rings, if the ring network really requires the slave rings to perform fast switching, for example if two links including the shared link in master ring break down, the shielding effect will significantly increase the delay of service switching, leading to loss of a large amount of data.

### Summary of the Invention

The invention is defined in the appended independent claims. Various aspects and features of the present invention are further defined in the dependent claims, and seek to offer an Ethernet network automatic protection method and system to avoid network performance degradation or network paralysis caused by closed ring due to breakdown, thus significantly improving the breakdown-tolerant capability of the Ethernet when the network topology is complicated.

In order to solve the above problem, the present invention offers an Ethernet automatic protection method, and when there are several physical rings which are tangent in the control domain, the control domain is firstly decomposed as a hierarchical structure including one master ring and leveled link segments, and one master node and several transmission nodes are configured for both the master ring and each link segment, meanwhile, the nodes connecting at least two levels are configured as border nodes; The master node and transmission nodes of the master ring cooperate with each other to detect the state of links in the master ring and perform service switching when the master ring breaks down or recovers from the breakdown; the master node and transmission nodes of each link segment cooperate with each other to detect the state of the link segment and perform service switching when the link segment at this level breaks down or recovers from the breakdown.

Furthermore, the above method may have the following feature:
Said control domain has several ring nodes supporting the identical service VLAN and uses the identical control VLAN, said link segment has the border nodes which shares links with the master ring or the link segment at the upper level and the unshared parts.

Furthermore, the above method may have the following feature:
When configuring the border nodes, two ports are configured on the master ring or the link segment at the upper level as the master node or transmission nodes of the master ring or the link segment at the upper level; one access port is configured on the link segment at the access level as the master node or transmission node of this link segment, and is referred to border control node when being as the master node of the link segment; while referred to border auxiliary node when being as the transmission node of the link segment; when at least one border node of the link segment receives MAC address updating message sent by other nodes of the link segment, it forwards the address updating message to the nodes of the master ring or the link segment at the upper level.

Furthermore, the above method may have the following feature:
Said master node and the transmission nodes of the master ring cooperate with each other to detect the state of the links in the master ring with the alarm mode of receiving the breakdown alarm from other nodes or the sample mode of actively sending detection message, and the sample mode means that the master node periodically send hello message from the master port, and the message is finally returned to the slave port of the master node through the forwarding by the transmission nodes when the ring is in normal condition, and if the hello message is timed out, the link is considered to have a breakdown.

Furthermore, the above method may have the following feature:
Said master node and the transmission nodes of the link segment cooperate with each other to detect the state of the links in the master ring with the alarm mode of receiving the breakdown alarm of other nodes and the sample mode of actively sending detection message, and wherein the sample mode means:
   When the master node is not a border control node, it blocks the forwarding capability of the service VLAN of the slave port and periodically sends hello message from the master port and slave ports respectively, and the hello message is sent to the border auxiliary nodes through the forwarding by the transmission node when the link segment is in normal condition, and the border auxiliary node returns the message to the corresponding master port and slave port of the master node through the access port, and if the hello message at the port is timed out, the link is considered to have a breakdown.

When the master node is a border control node, it blocks the forwarding capability of the service VLAN of the access port, i.e. slave port, and periodically sends hello message from the access port, and the hello message is sent to the border auxiliary nodes on the other side of the link segment through the forwarding by the transmission nodes when the link segment is in normal condition, and the border auxiliary node returns from the access port the message finally to the access port of the border control node, and if the hello message at the port is timed out, the link is considered to have a breakdown.

Furthermore, the above method may have the following feature:
when the master ring breaks down, the process of service switching is as follows: the master node of the master ring unblocks the forwarding capability of the service VLAN of its slave port when detecting that the link of the master ring breaks down, sends MAC address updating message, which is only forwarded in the master ring, from the master port and slave port and updates the MAC address table of the related nodes of the master ring, and the related nodes implement service protection switching according to the updated address table.

When the master ring recovers from the breakdown, the process of service switching is as follows: the master node of the master ring blocks the forwarding capability of the service VLAN of its slave port when detecting that the link of the master ring breaks down, sends MAC address updating message, which is only forwarded in the master ring, from the master port and slave port and updates the MAC address table of the related nodes of the master ring, and the related nodes implement the service protection switching according to the updated address, wherein the link breakdown recovery of the master ring detected by the master node of the master ring includes that the slave port re-receives hello message from the master port.

Furthermore, the above method may have the following feature:
the process of service switching when the link segment breaks down is as follows:
   When the master node of the link segment is not a border control node, it sends MAC address updating message to other nodes of the link segment on the side at which it is located, and the border auxiliary nodes on this side forward the message to the nodes of the master ring or the link segment at the upper level;

When the master node of the link segment is a border control node, it sends MAC address updating message to the link segment through the access port and also to the nodes of the master ring or the link segment at the upper level;

The border auxiliary nodes on the other side of the link segment send MAC address updating message to the nodes on its side of the link segment through the access port, after the related nodes of said link segment, master ring or the link segment at the upper level receive the MAC address updating message, they update the MAC address table and implement service protection switching according to the updated address table.

Furthermore, the above method may have the following feature:
Said border auxiliary node is configured to be able to process breakdown alarm message and judge whether the hello message is timed out or not, if the border auxiliary node detects link interruption, receives breakdown alarm message from the transmission nodes, or the hello message at the access port is timed out, the link segment is considered to have a breakdown;

If said border auxiliary node receives MAC address updating message sent by the node of the link segment through the access port before detecting the link breakdown, it forwards the message to the nodes of the master ring or the link segment at the upper level, if it receives MAC address updating message sent by another border node of the link segment at which it is located before detecting the link breakdown, it forwards the message to the related nodes of this link segment through the access port, if it does not receive MAC address updating message before detecting the link breakdown, it forwards the message to the nodes of the master ring or the link segment at the upper level, and also to the related nodes of the link segment through the access port.

Furthermore, the above method may have the following feature:
After the master node of the link segment detects the breakdown or breakdown recovery of its link segment, it sends MAC address updating message to the master ring or the link segment at the upper level, and the message is forwarded by the border port to perform fast protection switching of the corresponding slave ring; after said border node detects the breakdown or breakdown recovery of its link segment, it directly sends MAC address updating message to the master ring or the link segment at the upper level to perform fast protection switching of the corresponding slave ring.

Furthermore, the above method may have the following feature:
The process of service switching when the link segment recovers from the breakdown is as follows: after the master node of the link segment detects the leveled link segment recovers from the breakdown, including that the port sending hello message receives hello message returned by the border auxiliary node, it blocks the forwarding capability of the corresponding service VLAN of the slave port, and when the master node is not a border control node, the above address updating message is sent from the master port and the slave port to the nodes of the master ring or the link segment at the upper level through the forwarding by the border auxiliary node; when said master node is a border control node, it sends the address updating message to the link segment through the access port and also to the nodes of the master ring or the link segment at the upper level; after the other nodes of the link segment as well as the nodes of the master ring or the link segment at the upper level receive the MAC address updating message, they update their MAC address table and implement the service protection switching according to the updated address table.

Furthermore, the above method may have the following feature:
When the link segment recovers from the breakdown, if the border auxiliary node receives the address updating message from the shared link before receiving the address updating message sent by the master node through the link segment, it forwards the message to the nodes of the link segment through its access port rather than to the nodes of the master ring or the link segment at the upper level, that is, the message is off the ring.

The Ethernet automatic protection system offered by the present invention comprises a control domain consisting of several ring nodes which support the identical service VLAN and use the identical control VLAN, and there is possibility that several physical rings are tangent in the control domain, it is characterized in that, the control domain is a hierarchical structure including a master ring and leveled link segments, and each link segment comprises border nodes which share the links with the master ring or the link segment at the upper level and the unshared parts, the master ring and each link segment have a master node, while the other nodes are transmission nodes, wherein:
Said master node of the master ring is responsible for the strategy and control of the master ring, including detecting the state of the links in the master ring, and switching the services when the master ring breaks down or recovers from the breakdown;
Said transmission nodes of the master ring are used to assist the master node of the master ring in detecting the state of ring and switching the services under the control of the master node;
Said master node of the link segment is responsible for the strategy and control of this link segment, including detecting the state of this link segment, and switching the services when the link segment breaks down or recovers from the breakdown;
Said transmission nodes of the link segment are used to assist the master node of this link segment in detecting the state of the ring and switching the services under the control of the master node;
Said border nodes are used to assist the master node of this link segment in detecting the state of this link segment and forwarding the MAC address updating message of this link segment and the link segments at the lower levels to the nodes of the master ring or the link segment at the upper level;

After the nodes of the master ring and the link segment receive the MAC address updating message, they update their MAC address table and implement service protection switching according to the updated address table.

Furthermore, the above system may have the following feature:
Said border node configures two ports in the master ring or the link segment at the upper level as the master node or transmission nodes of the master ring or the link segment at the upper level; meanwhile, it configures an access port in the link segment at the access level as a master node or a transmission node of this link segment and the access port is referred to as a border control node when serving as the master node of the link segment; and referred to as border auxiliary node when serving as the transmission node of the link segment.

Furthermore, the above system may have the following feature:
Said master node and the transmission nodes of the master ring cooperate with each other to detect the state of the links in the master ring with an alarm mode of receiving the breakdown alarm of other nodes and a sample mode of actively sending detection message;
Said master node and the transmission nodes in the link segment cooperate with each other to detect the state of the links of the master ring with an alarm mode of receiving the breakdown alarm of other nodes and a sample mode of actively sending detection message;

When the master node of the link segment is not a border control node, it blocks the forwarding capability of the service VLAN of the slave port and periodically sends hello message from the master port and slave ports respectively, the hello message is forwarded to the border auxiliary node through the transmission nodes, and the border auxiliary node returns the message to the corresponding master port and slave port of the master node through the access port, and if the hello message at the port is timed out, the link is considered to have a breakdown.

When the master node is a border control node, it blocks the forwarding capability of the service VLAN of the slave port, i.e. access port, and periodically sends hello message from the access port, and the hello message is forwarded to the border auxiliary node on the other side through the transmission nodes, and the border auxiliary node returns the message to the access port of the border control node through the access port, and if the hello message at the port is timed out, the link is considered to have a breakdown.

Furthermore, the above system may have the following feature:
When the master node of the link segment is not a border control node, it sends MAC address updating message to the other nodes of the link segment on the side at which it is located after detecting the link breakdown; When the master node of the link segment is a border control node, it sends MAC address updating message to the link segment through the access port, and to the nodes of the master ring or the link segment at the upper level after detecting the link breakdown;

If the border auxiliary node is on the same side as the master node is when the link segment breaks down, it forwards the message to the nodes of the master ring or the link segment at the upper level; if the border auxiliary node is not on the same side as the master node is, it sends MAC address updating message to the nodes on this side of the link segment through the access port;

After the related nodes of said link segment, master ring or the link segment at the upper level receive the MAC address updating message, they update their MAC address table and implement service protection switching according to the updated address table.

Furthermore, the above system may have the following feature:
Said border auxiliary node is configured to be able to process breakdown alarm message and to judge whether the hello message is timed out or not, and to serve as the temporary master node to detect the link breakdown; if said border auxiliary node receives MAC address updating message sent by the nodes of the link segment through the access port before detecting the link breakdown, it forwards the message to the nodes of the master ring or the link segment at the upper level, if it receives MAC address updating message sent by another border node of this link segment before detecting the link breakdown, it forwards the message to the related nodes of this link segment through the access port, if it does not receive MAC address updating message before detecting the link breakdown, it forwards the MAC address updating message to the nodes of the master ring or the link segment at the upper level, and also to the related nodes of the link segment through the access port.

Furthermore, the above system may have the following feature:
After the master node of the link segment detects that the leveled link segment recovers from the breakdown, it blocks the forwarding capability of the corresponding service VLAN of the slave port, and if the master node of the link segment is not a border control node, the above address updating message is sent from the master port and the slave port; if said master node of the link segment is a border control node, it sends the address updating message to the link segment through the access port and also to the nodes of the master ring or the link segment at the upper level.

To sum up, the ZESR Ethernet Automatic Protection method offered by the present invention simplifies the complicated network topology into a hierarchical structure with the master ring and leveled link segments, thus decomposing the complicated ring network detection into a simplified, leveled and localized process, and fundamentally solving the problem of Ethernet breakdown protection switching when the network topology is complicated, and avoiding the situation that the network is not usable because of closed ring caused by the breakdown, thus improving the breakdown-tolerant capability of the ring network, extending the application scope of the ZESR Ethernet networking in accordance with the method of the present invention, and significantly ensuring the reliability and stability of the service.

### Brief Description of Drawings

In the following, the present invention will be described in further detail with reference to the accompanying figures and the embodiments.
FIG. 1-1 is a topology of the EAPS interworking rings;
FIG. 1-2 illustrates the condition when the public link of EAPS interworking rings shown in FIG 1 breaks down;
FIG. 2-1 is a topology of the interworking rings of the shared indirect interconnection link;
FIG. 2-2 illustrates the condition that two links of the master ring breaks down;
FIG 3-1 is a topology of the ZESR hierarchical network in accordance with the present invention;
FIG. 3-2 illustrates the main idea of the ZESR Ethernet automatic protection method in accordance with the present invention;
FIG. 4-1 illustrates the protection switching result when the ZESR master ring breaks down in accordance with the present invention;
FIG. 4-2 illustrates the protection switching result when the link segment_1 at level 1 breaks down on the basis of FIG. 4-1;
FIG. 4-3 illustrates the protection switching result when link segment_2 at level 1 breaks down on the basis of FIG. 4-2;
FIG. 4-4 illustrates the protection switching result when the master ring and the link segment_2 at level 1 recovers from the breakdown on the basis of FIG. 4-3;
FIG. 5 illustrates a flow chart of an embodiment in accordance with the present invention.

### Preferred Embodiments of the Present Invention

The main idea of the present invention is demonstrated as follows: the present invention introduces the concepts of master ring, level and link segment. Taking the Ethernet shown in FIG. 3-1 as an example, S1, S2, S3 and S4 in FIG 3-1 form a master ring and S1 is its master node 11; S3, S4, S5 and S6 form a slave ring 1 at level 1 and S5 is its master node 12; S3, S4, S7 and S8 form a slave ring 2 at level 1 and S7 is its master node 12; the salve rings at lower levels consider that the slave rings or master ring at higher levels are permanently connected with each other, as shown in FIG. 3-2. Moreover, the concept of border node 33 is introduced to decompose the complicated network ring detection as a simplified, leveled and localized process, and thus fundamentally solve the problem of Ethernet breakdown protection switching when the network topology is complicated.

In the following, the present invention will be described in further detail with reference to the accompanying figures and the embodiments.

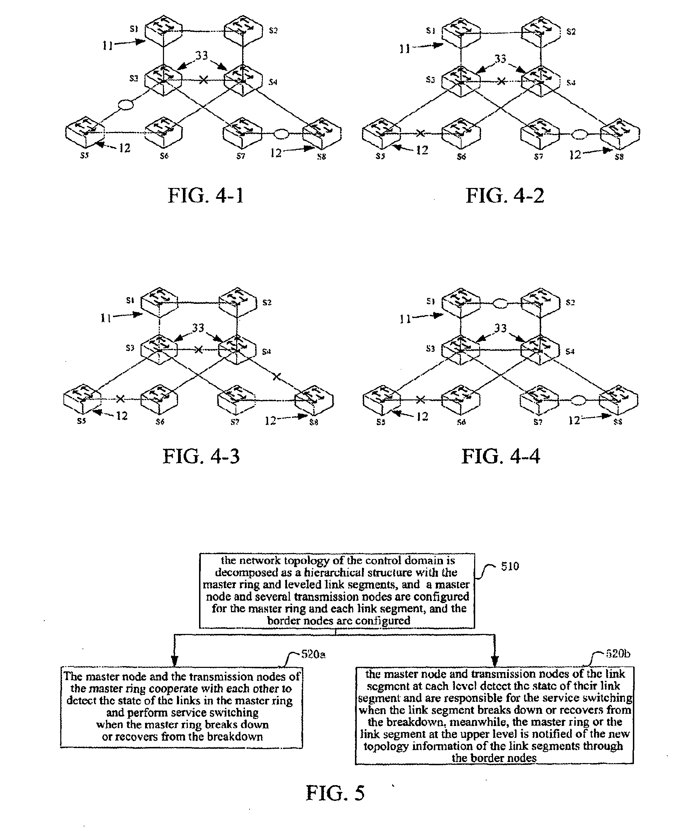

The Ethernet automatic protection method applied in the embodiment of the present invention firstly decomposes the control domain as a hierarchical structure with a master ring and leveled link segments and configures the nodes, and then detects and performs service switching according to the master ring and the leveled link segments. As shown in FIG. 5, the method comprises the following steps:
Step 510, firstly, the network topology of the control domain is decomposed as a hierarchical structure with the master ring and leveled link segments, and according to the decomposition result, a master node and several transmission nodes are configured for the master ring and each link segment, and the border nodes are configured;

In the present invention, several ring nodes supporting the identical service VLAN (the nodes in the ring network) are defined in a control domain (ZESR control domain) and the nodes use the identical control VLAN (the VLAN at which the ZESR protocol message is located). Firstly the control VLAN and service VLAN in the control domain are configured, and when the domain consists of several physical rings, it is decomposed as a hierarchical structure with a master ring and leveled link segments. The link segment at each level is considered to be directly or indirectly connected with the master ring, that is, the link segment at level 1 is directly connected with the master ring, while the link segments at other levels are directly connected with the link segment at its upper level so as to indirectly connect with the master ring. One of the rings is indicated as the master ring and its level is defined as Level 0, while other rings are degraded to be link segments connected with the master ring or the link segment of their upper level, and the link includes the border nodes which share the links with the master ring or the link segment at the upper level and the unshared parts. In this embodiment, the less the value of level is, the higher the level is. If the control domain has only a single ring, this ring is configured as the master ring.

Within ZESR control domain, the nodes are configured according to the hierarchical structure, and the configuration types are as follows: the master node and transmission nodes of the master ring, the master node and transmission nodes of the link segments, and a special kind of nodes (border nodes), and the configured system comprises:
a master node of the master ring: the master ring has a master node responsible for the strategy and control of the master ring, such as detecting the state of the links in the master ring and switching the services when the master ring breaks down or recovers from the breakdown.
transmission nodes of the master ring: all other nodes of the master ring except the master node are the transmission nodes of the master ring and are used to assist the master node of the master ring in detecting the state of the ring and performing service switching under the control of the master node.
a master node of the link segment: each link segment has a master node responsible for the strategy and control of this link segment, such as detecting the state of this link segment and switching the services when the link segment breaks down or recovers from the breakdown.
transmission nodes of the link segment: all other nodes in the link segment except the master node are the transmission nodes of this link segment and are used to assist the master node of the link segment in detecting the state of the ring and performing service switching under the control of the master node.
a border node: i.e., the node connecting at least two levels simultaneously in the domain, the border node has two ports in the master ring or the link segment at the upper level and can serve as the master node or a transmission node; meanwhile, there is an access port in the link segment at the access level (low level) which can serve as the master node or transmission node of the link segment, and when serving as the master node of the link segment, it is referred to as the border control node and there is at most one border control node; when serving as the transmission node of the link segment, it is referred to as the border auxiliary node and there may be several border auxiliary nodes. The border nodes are used to assist the master node of the link segment in detecting the state of the link segment and forward the MAC address updating message of this link segment to the nodes of the master ring or those of the link segment at the upper level.

In the present embodiment, said border node treats distinctively the detection message of the master node of its link segment and the detection message of the master ring or the link segment at the upper level, that is, it returns the message to the master node of its link segment and forwards or transmits transparently the message to the next node of the master ring or the link segment at the upper level according to the original direction. In addition, when at least one border node of the link segment at access level receives the MAC address updating message sent by the other nodes of this link segment, it forwards the address updating message to the nodes of the master ring or those of the link segment at the upper level.

Especially, the border auxiliary node in this embodiment can be configured to be able to process breakdown alarm message and judge whether the hello message is timed out or not, and the border auxiliary node can be used as the temporary master node to detect the link breakdown; if said border auxiliary node receives MAC address updating message sent by the node of the link segment through the access port before detecting the link breakdown, it forwards the message to the nodes of the master ring or the link segment at the upper level; if it receives MAC address updating message sent by another border node of the link segment at which it is located before detecting the link breakdown, it forwards the message to the related nodes of the link segment through the access port; if it does not receive MAC address updating message before detecting the link breakdown, it forwards the message to the node of the master ring or the link segment at the upper level, and also to the related nodes of the link segment through the access port.

It should be noted that the master node of the master ring can be the border node and even the border control node simultaneously in entity. That is, the master node of the master ring and that of the link segment can be the identical. The specific function of all above nodes is described in other places in this specification, which will not be listed here.

Step 520a, said master node and the transmission nodes of the master ring cooperate with each other to detect the state of the links in the master ring and perform service switching when the master ring breaks down or recovers from the breakdown;

There are two modes of link breakdown detection in this embodiment: one is an alarm mode, in which if a node detects a link breakdown, it sends breakdown alarm message and the master node of the master ring or the link segment performs the related service switching after receiving the breakdown message from other nodes of the master ring or the link segment; the other is a sample mode, in which the master node actively sends detection message, for example, it periodically sends hello message, to detect the link breakdown, and if the master node does not receive the hello message sent in specific time, the link is considered to have a breakdown in the network. The sample node is a good supplementation to the alarm mode, and it is the main technical method for detecting that the network recovers from the breakdown.

For the master ring, the master node and the transmission nodes of the master ring cooperate with each other to detect the state of the links in the master ring with the sample mode and the alarm mode, and the master node periodically sends hello message from the master port, and the message is sent to the slave port of the master node through the forwarding by the transmission nodes when the ring is in normal condition. If the master ring is stable and there is no link interruption in the ring, the master node will block the forwarding capability of the corresponding service VLAN of the slave port to avoid storm caused by the closed ring. The sample mode is consistent with that in the prior art.

If a link breaks down in the master ring, the master node of the master ring receives the event of link interruption (that is, directly detects the link interruption and receives the breakdown alarm message sent by the transmission node), or it finds that the hello message is timed out, then the master ring enters "Ring Failed" state and the forwarding capability of the service VLAN of the slave port is unblocked. Since the ring topology is changed, the master node should send the MAC address updating message "RING-DOWN-FLUSH-FDB" which is only forwarded in the master ring from the master port and slave port to update the MAC address table of related nodes in the master ring, and the nodes implements fast service protection switching according to the updated address table. The master port and the slave port of the master node are used simultaneously to send the MAC address updating message in order to fasten the update of the address table, so as to implement fast service switching.

If the master node of the master ring detects that the master ring recovers from the breakdown, for example, the slave port re-receives hello message from the main port, then the master ring enters "Ring Complete" state, the forwarding capability of the corresponding service VLAN of the slave port is blocked, and the MAC address updating message "RING-UP-FLUSH-FDB" which is only forwarded in the master ring is sent to the master port and slave port to update the MAC address updating message of the related nodes of the master ring, and the related nodes implement service switching according to the updated address table. Both ports are used to send the message simultaneously so as to fasten the transmission of the message to implement fast switching.

Step 520b, the master node and transmission nodes of the link segment at each level detect the state of their link segment and are responsible for the service switching when the link segment breaks down or recovers from the breakdown.

When the master node is not a border control node, it periodically sends hello message from the master port and the slave port, and the message is sent to the border auxiliary node through the forwarding by the transmission nodes when the link segment is in normal condition, and the border auxiliary node performs echo mode for the message at the access port, and finally the message is returned to the corresponding master port and slave port of the master node. When the master node is a border control node, it periodically sends hello message from the access port, and the message is sent to the border auxiliary node on the other side of the link segment through the forwarding by the transmission node when the link segment is in normal condition, and the border auxiliary node performs echo mode for the message at the access port, and finally the message is returned to the access port of the border control node. To sum up, the sample mode of the link segment is different from that in the prior art, and the detection is only done for the link segment and is not related to whether the master ring or the link segment at the upper level is local and leveled. It is a method for detecting the sample breakdown of Echo Mode. Yet the method for detecting the link segments is not limited to this, and asynchronous mode can also be applied.

If leveled link segment breaks down, the master node of the link segment receives the event of link interruption (i.e. directly detects link interruption or receives the breakdown alarm message sent by the transmission nodes), or finds that the hello message at the port is timed out, then the link segment enters "Seg Failed" state and the forwarding capability of the service VLAN of the corresponding port is unblocked.

In this embodiment, the border auxiliary node can also detect the breakdown of the link segment, including receiving the event of interruption (directly detecting link interruption or receiving the breakdown alarm message sent by the transmission nodes), or the hello message of the access port is timed out, that is, it does not receive the hello message sent by the master node of the segmented node in specified time, the node enters "Master Down" state, and the link segment also enters "Seg Failed" state.

If the link segment is stable and there is no link interruption, the master node will block the forwarding capability of the corresponding service VLAN of the slave port to avoid storm caused by the closed ring. When the master node is a border control node, its access port is certainly a block port when the link is in normal condition, and it is also referred to the slave port of the border control node corresponding to the slave ring in this specification.

Since the topology of the link segment is changed, the master node should send the MAC address updating message "SEG-DOWN-FLUSH-FDB" to the other nodes of this link segment, and the nodes of the master ring or the link segment at the upper level, and the related nodes update the MAC address table and implement fast service protection switching according to the updated address table. The service switching in the slave ring at which the link segment is located can be properly performed and there is no delay since there is no shielding effect.

When the master node is not a border control node, the above address updating message is sent from the master port and the slave port, and if one of the ports connects with a broken link, the message does not need to be sent. The message is forwarded by the border auxiliary node on this side to the nodes of the master ring or the link segment at the upper level (if the border auxiliary node on this side detects the link breakdown before it receives the MAC address updating message sent by the nodes of the link segment from the access port, it may actively forward the MAC address updating message to the nodes of the master ring or the link segment at the upper level, and forwards the message to the other nodes of the link segment on the side at which it is located through the access port). If the master node is a border control node, it sends this address updating message to the nodes of the master ring or the link segment at the upper level besides to the link segment through the access port. In the above condition, when the border node forwards this message in the master ring or in the link segment at the upper level, it is preferred that the message is forwarded through the two ports simultaneously to fasten the update.

In the above processing, the MAC address table on the side (taking the breakdown link as the boundary) at which the master node is located of the link segment is updated, while the MAC address table of the nodes on the other side of the link segment is updated by the border auxiliary node on this side, that is, this border auxiliary node serves as the "temporary master node", and the details will be described as follows:

If the border auxiliary node does not receive the MAC address updating message forwarded by the border node on the other side before it detects link segment breakdown, the border auxiliary node sends the MAC address updating message "SEG-DOWN-FLUSH-FDB" through the access port and the two ports of the master ring or the link segment at the upper level, and the related nodes of the master ring or the link segment at the upper level and those of the link segment between this border auxiliary node and the breakdown node update the MAC address table.

If the border auxiliary node receives the MAC address updating message forwarded by the border node on the other side before detecting the link segment breakdown, it only needs to drop the MAC address updating message from the ring, that is, forward the message to the nodes on the side at which it is located of the link segment through the access port.

With the above detection function, the border auxiliary node can send the updating message to the master ring, the link segment at the upper level, or the link segment on the side at which it is located before receiving the MAC address updating message forwarded by the border node on the other side to implement fast switching.

After receiving the MAC address updating message, the border auxiliary node can stop breakdown detection. Moreover, if the MAC address of the link segment at level 2 is updated and is notified to its tangent link segment at level 1, the link segment at level 1 should notify this MAC address updating message to the master ring, that is, the master ring should know in real time the topology of the leveled link segments in the whole control domain.

When the master node of the leveled link segment detects that the leveled link segment recovers from the breakdown (for example, the master port and slave port of the master node which is not a border node receive the hello message returned by the border auxiliary node, or the access port of the border control node receives the hello message returned by the border auxiliary node), that is, the link segment enters "Seg Complete" state, the forwarding capability of the corresponding service VLAN of the slave port is blocked and the MAC address updating message "SEG-UP-FLUSH-FDB" is sent to the other nodes of this link segment and the nodes of the master ring or the link segment at the upper level, and the related nodes update the MAC address table and implement fast service protection switching according to the updated address table.

When the master node is not a border control node, the above address updating message is sent from the master port and slave one (if the message is sent from one port, the service switching will be relatively slow). This message is forwarded to the nodes of the master ring or the link segment at the upper level through the border auxiliary node. When the master node is a border control node, the message is sent to the nodes of the master ring or the link segment at the upper level besides to the link segment through the access port, it is preferred that the message is forwarded through the two ports. In this embodiment, for the border auxiliary node, if it receives the address updating message from the shared link before it receives the address updating message sent by the master node through the link segment, it forwards the message to the nodes of the link segment through its access port rather than to the nodes of the master ring or the upper-level link segment, that is, the message is off the ring. Of course, if the requirement for the service switching speed when recovering from the breakdown is not very strict, it is not needed to apply this method.

An example in accordance with the method of the present invention will be described in detail in combination with various practical link conditions of a network topology, respectively shown in FIG. 3-1, FIG. 4-1, FIG. 4-2, FIG. 4-3 and FIG. 4-4:
1) Practical network topology and logical division: as shown in FIG. 3-1, FIG. 4-1, FIG. 4-2, FIG. 4-3 and FIG. 4-4, the nodes of the ring are in the identical control domain, and S1, S2, S3 and S4 form a master ring and S1 is its master node 11; S3, S4, S5 and S6 form a slave ring 1 at level 1 and the other parts except the shared link between S3 and S4 of slave ring 1 form link segment_1 at level 1, and S5 is the master node 12 of slave ring 1, that is, it is the master node of link segment_1; S3, S4, S7 and S8 forms slave ring2 at level land the other parts except the shared link between S3 and S4 of slave ring 2 form link segment_2 at level 1, and S7 is the master node 12 of slave ring 2, that is, it is the master node of link segment_2; S3 and S4 are border auxiliary nodes 33, and when the ring network topology is stable, the corresponding master node blocks the forwarding capability of the service VLAN of its slave port.
(2) the case without breakdown: as shown in FIG. 3-1, the forwarding capability of the service VLAN of link S1-S2, link S5-S3 and link S7-S8 is blocked, and the hello message of master node S1 is sent through the master port and is returned to the slave port through the master ring; the hello message of master node S5 is sent through both ports and sent to border nodes S3 and S4 through Link segment_1 at level 1, and the border nodes send the hello message back to two sending ports of S5; and the generation process of hello message of master node S7 is similar to that of S5.
(3) the case with the breakdown:
   ① The master ring breaks down: as shown in FIG. 4-1, the link S3-S4 breaks down, and the breakdown alarm message is sent from S3 and S4 to master node S1, after S1 receives the alarm, it unblocks the forwarding capability of the service VLAN of link S1-S2 and sends MAC address updating message to update the MAC address table of the related nodes of the master ring.
   ② link segment_1 at level 1 breaks down: as shown in FIG. 4-2, the link S5-S6 breaks down, after master node S5 detects the link breakdown, it unblocks the forwarding capability of the service VLAN of link S3-S5 and sends MAC address updating message to border node S3 which forwards the message in the master ring to update the MAC address table of the related nodes of the master ring or the leveled link segments. Meanwhile, S4 also detects link breakdown and if S4 does not receive MAC address updating message (forwarded by S3) of Link segment_1 at level 1 from the master ring before detecting link breakdown, it generates a MAC address updating message and sends the message to both ports of the master ring to update the MAC address table of related nodes of the master ring and meanwhile sends MAC address updating message to S6 through the access port.
   ③ Moreover, link segment_2 at level 1 also breaks down: as shown in FIG. 4-3, the link S4-S8 breaks down, the breakdown alarm message is sent from S8 and to master node S7, after S7 receives the alarm, it unblocks the forwarding capability of the service VLAN of link S7-S8 and meanwhile sends MAC address updating message to border node S3 which forwards the message in the master ring to update the MAC address table of the related nodes of the master ring and the link segment. Meanwhile, S4 also detects link breakdown and if S4 does not receive MAC address updating message (forwarded by S3) of Link segment_2 at level 1 from the master ring before detecting the link breakdown, it generates a MAC address updating message and sends the message to both ports of the master ring to update the MAC address table of related nodes of the master ring.
(4) the case with the breakdown:
   ④ Moreover, the master ring and link segment_2 at level 1 recovers from breakdown: as shown in FIG. 4-4, when master node S1 of the master ring use sample mode to detect that the master ring recovers from the breakdown, it blocks the forwarding capability of the service VLAN of link S1-S2 and sends MAC address updating message to update the MAC address table of the related nodes of the master ring; when master node S7 of Link segment_2 at level 1detects that the link segment recovers from the breakdown, it blocks the forwarding capability of the service VLAN of link S7-S8 and sends MAC address updating message to border nodes S3 and S4 which decide whether to forward the message to the master ring or not according to the state of the current state machine (the message won't be forwarded to the master ring if either S3 or S4 finds that the MAC address updating message forwarded by another border node is received in the master ring), it updates the MAC address table of related nodes of the master ring and those of the leveled link segments.

### Industrial Applicability

The technical problem to be solved by the method of the present invention is to implement Ethernet automatic protection in complicated network topology. The complicated network topology comprises single ring, interworking ring, multi-level-cross ring or star-shaped networking structure.

## Claims

1. An Ethernet automatic protection method, wherein there are several physical rings tangent in a control domain, the control domain is firstly decomposed as a hierarchical structure, **characterized in that** one of the physical rings is indicated as a master ring of a highest level and other physical rings are degraded to be leveled link segments without shared links connected with the master ring or the link segment of their upper level, and one master node and several transmission nodes are configured for both the master ring and each link segment, meanwhile, nodes connecting the master ring and the link segment or connecting link segments of different levels are configured as border nodes; the method comprises:
cooperating, by the master node and transmission nodes of the master ring , with each other to detect states of links in the master ring and perform service switching when the master ring breaks down or recovers from a breakdown, wherein a MAC address updating message is forwarded from the master node to transmission nodes of the master ring;
cooperating, by the master node and the transmission nodes of each link segment , with each other to detect state of the link segment and perform service switching when the link segment at present level breaks down or recovers from a breakdown, wherein a MAC address updating message is forwarded from the master node to transmission nodes of the link segment;
assisting, by the border nodes, the master node of the link segment in detecting the state of the link segment and forward the MAC address updating message of this link segment to the nodes of the master ring or those of the link segment at the upper level;
updating, by the related nodes of the master ring or those of the link segment the MAC address table and implement service protection switching according to the updated address table.

2. The method of claim 1, wherein:
said control domain has several ring nodes supporting the identical service VLAN and uses the identical control VLAN, said link segment has the border nodes which shares links with the master ring or the link segment at a upper level and unshared parts.

3. The method of claim 1, wherein:
when configuring the border nodes, two ports are configured on the master ring or the link segment at the upper level as the master node or transmission nodes of the master ring or the link segment at the upper level; one access port is configured on the link segment at an access level as the master node or the transmission node of the link segment, and is referred to a border control node when serving as the master node of the link segment; while referred to border auxiliary node when serving as the transmission node of the link segment; when at least one border node of the link segment receives a MAC address updating message sent by other nodes of the link segment, said at least one border node forwards the address updating message to a node of the master ring or the link segment at the upper level.

4. The method of claim 1, wherein:
the process of service switching when the master ring breaks down is as follows: the master node of the master ring unblocks forwarding capability of the service VLAN of its slave port when detecting that the link of the master ring breaks down, sends a MAC address updating message, which is only forwarded in the master ring, from the master port and the slave port and updates the MAC address table of the related nodes of the master ring, and the related nodes implement service protection switching according to the updated address table;
the process of service switching when the master ring recovers from the breakdown as follows: the master node of the master ring blocks forwarding capability of the service VLAN of its slave port when detecting that the link of the master ring breaks down, sends a MAC address updating message, which is only forwarded in the master ring, from the master port and the slave port and updates the MAC address table of the related nodes of the master ring, and the nodes implement the service protection switching according to the updated address, wherein link breakdown recovery of the master ring detected by the master node of the master ring comprises that the slave port re-receives a hello message from the master port.

5. The method of claim 3, wherein the process of service switching when the link segment breaks down is as follows:
when the master node of the link segment is not a border control node, it sends a MAC address updating message to other nodes of the link segment on a side at which it is located, and the border auxiliary nodes on the side forward the message to the nodes of the master ring or the link segment at the upper level;
when the master node of the link segment is a border control node, it sends a MAC address updating message to the link segment through the access port and also to the nodes of the master ring or the link segment at the upper level;
the border auxiliary nodes on the other side of the link segment send the MAC address updating message to the nodes on the side of the link segment through the access port; after receiving the MAC address updating message, the related nodes of said link segment, the master ring or the link segment at the upper level update the MAC address table and implement service protection switching according to the updated address table.

6. The method of claim 5, wherein;
said border auxiliary node receives a MAC address updating message sent by the node of the link segment through the access port before detecting link breakdown, it forwards the message to the nodes of the master ring or the link segment at the upper level, if it receives a MAC address updating message sent by another border node of the link segment at which it is located before detecting link breakdown, it forwards the message to the related nodes of the link segment through the access port, if it does not receive a MAC address updating message before detecting link breakdown, it forwards the message to the nodes of the master ring or the link segment at the upper level, and also to the related nodes of the link segment through the access port.

7. The method of claim 1, wherein:
after the master node of the link segment detects a breakdown or a breakdown recovery of its link segment, it sends a MAC address updating message to the master ring or the link segment at the upper level, and the message is forwarded by the border port to perform fast protection switching of the corresponding slave ring; after said border node detects a breakdown or a breakdown recovery of its link segment, it directly sends the MAC address updating message to the master ring or the link segment at the upper level to perform fast protection switching of the corresponding slave ring.

8. The method of claim 3, wherein:
the process of service switching when the link segment recovers from the breakdown is as follows: after the master node of the link segment detects that the leveled link segment recovers from the breakdown, it blocks forwarding capability of the corresponding service VLAN of the slave port, and when the master node is not a border control node, the above address updating message is sent from the master port and the slave port to the nodes of the master ring or the link segment at the upper level through the forwarding by the border auxiliary node; when said master node is a border control node, it sends the address updating message to the link segment through the access port and also to the nodes of the master ring or the link segment at the upper level; after receiving the MAC address updating message, the other nodes of the link segment as well as the nodes of the master ring or the link segment at the upper level update the MAC address tables and implement service protection switching according to the updated address table.

9. The method of claim 8, wherein:
when the link segment recovers from the breakdown, if the border auxiliary node receives the address updating message from a shared link before receiving the address updating message sent by the master node through the link segment, the border auxiliary node forwards the message to the nodes of the link segment through its access port rather than to the nodes of the master ring or the link segment at the upper level, that is, the message is off the ring.

10. An Ethernet automatic protection system comprising a control domain consisting of several ring nodes which support an identical service VLAN and using an identical control VLAN, wherein there is possibility that several physical rings are tangent in the control domain, and the control domain is a hierarchical structure, **characterized in that** one of the physical rings is indicated as a master ring of a highest level and other physical rings are degraded to be leveled link segments without shared links connected with the master ring or the link segment of their upper level, and each link segment comprises border nodes which are shared by the master ring or the link segments at an upper level and the unshared parts, the master ring and each link segment have a master node, while other nodes are transmission nodes, wherein:
said master node of the master ring is adapted to be responsible for strategy and control of the master ring, including detecting states of links in the master ring, forwarding a MAC address updating message to transmission nodes of the master ring and switching services when the master ring breaks down or recovers from a breakdown;
said transmission nodes of the master ring are adapted to assist the master node of the master ring in detecting a state of the ring and switching services under control of the master node;
said master node of the link segment is adapted to be responsible for strategy and control of the link segment, including detecting a state of the link segment, forwarding a MAC address updating message to transmission nodes of the link segment and switching services when the link segment breaks down or recovers from a breakdown;
said transmission nodes of the link segment are adapted to assist the master node of the link segment in detecting the state of the ring and switching services under control of the master node;
said border nodes are adapted to assist the master node of the link segment in detecting the state of the link segment and forwarding a MAC address updating message of the link segment and the link segments at lower levels to the nodes of the master ring or those of the link segments at the upper level;
after receiving the MAC address updating message, the nodes of the master ring and the link segment are adapted to update the MAC address table and implement service protection switching according to the updated address table.

11. The system of claim 10, wherein:
said border node are adapted to configure two ports in the master ring or the link segment at the upper level as the master node or transmission nodes of the master ring or the link segment at the upper level; meanwhile, and configure an access port in the link segment at an access level as a master node or a transmission node of the link segment and the access port is referred to a border control node when serving as the master node of the link segment; and while referred to a border auxiliary node when serving as the transmission node of the link segment.

12. The system of claim 11, wherein:
said master node and the transmission nodes of the master ring are adapted to cooperate with each other to detect the states of the links in the master ring with an alarm mode of receiving a breakdown alarm of other nodes and a sample mode of actively sending a detection message;
said master node and the transmission nodes in the link segment are adapted to cooperate with each other to detect the states of the links of the master ring with the alarm mode of receiving a breakdown alarm of other nodes and the sample mode of actively sending a detection message;
when the master node of the link segment is not a border control node, it is adapted to block forwarding capability of the service VLAN of the slave port, i.e. access port, and periodically send a hello message from a master port and a slave port respectively, the hello message is forwarded to the border auxiliary node through forwarding by the transmission nodes, and the border auxiliary node is adapted to return the message to the corresponding master port and slave port of the master node through the access port, and if the hello message at the port is timed out, the link is considered to have a breakdown;
when the master node is a border control node, it is adapted to block forwarding capability of the service VLAN of the slave port and periodically send a hello message from the access port, and the hello message is forwarded to the border auxiliary node on another side through forwarding by the transmission node, and the border auxiliary node is adapted to return the message to the access port of the border control through the access port, and if the hello message at the port is timed out, the link is considered to have a breakdown.

13. The system of claim 11, wherein:
when the master node of the link segment is not a border control node, it is adapted to send a MAC address updating message to other nodes of the link segment on the side at which it is located after detecting a link breakdown; when the master node of the link segment is a border control node, it is adapted to send a MAC address updating message to the link segment through the access port, and to the nodes of the master ring or those of the link segment at the upper level after detecting the link breakdown;
if the border auxiliary node is on the same side as the master node is when the link segment breaks down, it is adapted to forward the message to the nodes of the master ring or those of the link segment at the upper level; if the border auxiliary node is not on the same side as the master node is, it is adapted to send the MAC address updating message to the nodes on the side of the link segment through the access port;
after receiving the MAC address updating message, the related nodes of said link segment, the master ring or the link segment at the upper level are adapted to send update the MAC address tables and implement service protection switching according to the updated address table.

14. The system of claim 11, wherein;
said border auxiliary node is adapted to process a breakdown alarm message and judge whether the hello message is timed out or not, and to be used as a temporary master node adapted to detect the link breakdown; if said border auxiliary node receives a MAC address updating message sent by the nodes of the link segment through the access port before detecting a link breakdown, it is adapted to forward the message to the nodes of the master ring or those of the link segment at the upper level, if it receives a MAC address updating message sent by another border node of the link segment at which it is located before detecting a link breakdown, it is adapted to forward the message to the related nodes of the link segment through the access port, if it does not receive a MAC address updating message before detecting a link breakdown, it is adapted to forward the message to the nodes of the master ring or those of the link segment at the upper level, and also to the related nodes of the link segment through the access port.

15. The system of claim 11, wherein:
after the master node of the link segment detects that the leveled link segment recovers from the breakdown, it is adapted to block forwarding capability of the corresponding service VLAN of the slave port, and if the master node is not a border control node, the above address updating message is sent from the master port and the slave port; if said master node is a border control node, it is adapted to send the address updating message to the link segment through the access port and also to the nodes of the master ring or those of the link segment at the upper level.

## Patentansprüche

1. Ein automatisches Ethernet-Schutzverfahren, wobei mehrere physikalische Ringe tangential in einer Kontrolldomäne vorhanden sind, wobei die Kontrolldomäne zuerst als eine hierarchische Struktur zerlegt wird, **dadurch gekennzeichnet, dass** einer der physikalischen Ringe als ein Master-Ring einer höchsten Stufe angegeben wird und andere physikalische Ringe auf gleichgemachte Verknüpfungssegmente ohne mit dem Master-Ring oder dem Verknüpfungssegment ihrer höheren Stufe verbundene geteilte Verknüpfungen degradiert werden, und ein Master-Knoten und mehrere Übertragungsknoten für sowohl den Master-Ring als auch jedes Verknüpfungssegment konfiguriert werden, währenddessen Knoten, die den Master-Ring und das Verknüpfungssegment verbinden, oder die Verknüpfungssegmente unterschiedlicher Stufen verbinden, als Border-Nodes konfiguriert werden, das Verfahren beinhaltet:
Kooperieren von dem Master-Knoten und den Übertragungsknoten des Master-Rings miteinander, um Zustände von Verknüpfungen in dem Master-Ring zu erfassen und
eine Service-Umschaltung durchzuführen, wenn der Master-Ring zusammenbricht oder
sich von einem Zusammenbruch erholt, wobei eine MAC-Adresse-Aktualisierungsnachricht von dem Master-Knoten an die Übertragungsknoten des Master-Rings weitergeleitet wird;
Kooperieren von dem Master-Knoten und den Übertragungsknoten jedes Verknüpfungssegments miteinander, um den Zustand des Verknüpfungssegments zu erfassen und eine Service-Umschaltung durchzuführen, wenn das Verknüpfungssegment auf der gegenwärtigen Stufe zusammenbricht oder sich von einem Zusammenbruch erholt, wobei eine MAC-Adresse-Aktualisierungsnachricht von dem Master-Knoten an die Übertragungsknoten des Verknüpfungssegments weitergeleitet wird;
Unterstützen des Master-Knotens des Verknüpfungssegments durch die Border-Nodes beim Erfassen des Zustands des Verknüpfungssegments und Weiterleiten der MAC-Adresse-Aktualisierungsnachricht dieses Verknüpfungssegments an die Knoten des Master-Rings oder die des Verknüpfungssegments auf der höheren Stufe;
Aktualisieren der MAC-Adresstabelle durch die zugehörigen Knoten des Master-Rings oder die des Verknüpfungssegments und Implementieren einer Service-Schutzumschaltung gemäß der aktualisierten Adresstabelle.

2. Verfahren gemäß Anspruch 1, wobei:
die Kontrolldomäne mehrere Ring-Knoten aufweist, die das identische Service-VLAN unterstützen, und das identische Kontroll-VLAN verwendet, das Verknüpfungssegment die Border-Nodes aufweist, die Verknüpfungen mit dem Master-Ring oder dem Verknüpfungssegment auf einer höheren Stufe und ungeteilten Teilen teilen.

3. Verfahren gemäß Anspruch 1, wobei:
beim Konfigurieren der Border-Nodes zwei Ports auf dem Master-Ring oder dem Verknüpfungssegment auf der höheren Stufe als der Master-Knoten oder die Übertragungsknoten des Master-Rings oder des Verknüpfungssegments auf der höheren Stufe konfiguriert werden; ein Zugangsport auf dem Verknüpfungssegment auf einer Zugangsstufe als der Master-Knoten oder der Übertragungsknoten des Verknüpfungssegments konfiguriert wird und beim Dienen als der Master-Knoten des Verknüpfungssegments als ein Border-Kontroll-Knoten bezeichnet wird; während er beim Dienen als der Übertragungsknoten des Verknüpfungssegments als Border-Hilfsknoten bezeichnet wird; wenn mindestens ein Border-Node des Verknüpfungssegments eine von anderen Knoten des Verknüpfungssegments gesendete MAC-Adresse-Aktualisierungsnachricht empfängt, der mindestens eine Border-Node die MAC-Adresse-Aktualisierungsnachricht an einen Knoten des Master-Rings oder des Verknüpfungssegments auf der höheren Stufe weiterleitet.

4. Verfahren gemäß Anspruch 1, wobei:
der Prozess der Service-Umschaltung beim Zusammenbrechen des Master-Rings wie folgt ist: der Master-Knoten des Master-Rings gibt die Weiterleitungsfähigkeit des Service-VLAN seines Slave-Ports frei, wenn erfasst wird, dass die Verknüpfung des Master-Rings zusammenbricht, sendet eine MAC-Adresse-Aktualisierungsnachricht, die lediglich in dem Master-Ring weitergeleitet wird, von dem Master-Port und dem Slave-Port und aktualisiert die Mac-Adresstabelle der zugehörigen Knoten des Master-Rings,
und die zugehörigen Knoten implementieren eine Service-Schutzumschaltung gemäß der aktualisierten Adresstabelle;
der Prozess der Service-Umschaltung, wenn sich der Master-Ring von dem Zusammenbruch erholt, wie folgt ist: der Master-Knoten des Master-Rings blockiert die Weiterleitungsfähigkeit des Service-VLAN seines Slave-Ports, wenn erfasst wird, dass die Verknüpfung des Master-Rings zusammenbricht, sendet eine MAC-Adresse-Aktualisierungsnachricht, die lediglich in dem Master-Ring weitergeleitet wird, von dem Master-Port und dem Slave-Port und aktualisiert die Mac-Adresstabelle der zugehörigen Knoten des Master-Rings, und die Knoten implementieren die Service-Schutzumschaltung gemäß der aktualisierten Adresse, wobei die Erholung des Master-Rings von dem Verknüpfungszusammenbruch, erfasst von dem Master-Knoten des Master-Rings, beinhaltet, dass der Slave-Port erneut eine Hallo-Nachricht von dem Master-Port empfängt.

5. Verfahren gemäß Anspruch 3, wobei der Prozess der Service-Umschaltung beim Zusammenbrechen des Verknüpfungssegments wie folgt ist:
wenn der Master-Knoten des Verknüpfungssegments kein Border-Kontroll-Knoten ist,
sendet er eine MAC-Adresse-Aktualisierungsnachricht an andere Knoten des Verknüpfungssegments auf einer Seite, auf der er sich befindet, und die Border-Hilfsknoten auf der Seite leiten die Nachricht an die Knoten des Master-Rings oder des Verknüpfungssegments auf der höheren Stufe weiter;
wenn der Master-Knoten des Verknüpfungssegments ein Border-Kontroll-Knoten ist,
sendet er eine MAC-Adresse-Aktualisierungsnachricht an das Verknüpfungssegment durch den Zugangsport und auch an die Knoten des Master-Rings oder des Verknüpfungssegments auf der höheren Stufe;
die Border-Hilfsknoten auf der anderen Seite des Verknüpfungssegments senden die MAC-Adresse-Aktualisierungsnachricht an die Knoten auf der Seite des Verknüpfungssegments durch den Zugangsport; nach dem Empfangen der MAC-Adresse-Aktualisierungsnachricht aktualisieren die zugehörigen Knoten des Verknüpfungssegments, des Master-Rings oder des Verknüpfungssegments auf der höheren Stufe die MAC-Adresstabelle und implementieren eine Service-Schutzumschaltung gemäß der aktualisierten Adresstabelle.

6. Verfahren gemäß Anspruch 5, wobei:
der Border-Hilfskonten eine MAC-Adresse-Aktualisierungsnachricht empfängt,
gesendet von dem Knoten des Verknüpfungssegments durch den Zugangsport vor dem Erfassen des Verknüpfungszusammenbruchs, er die Nachricht an die Knoten des Master-Rings oder des Verknüpfungssegments auf der höheren Stufe weiterleitet, falls er eine MAC-Adresse-Aktualisierungsnachricht empfängt, gesendet von einem anderen Border-Node des Verknüpfungssegments, an dem er sich befindet, bevor der Verknüpfungszusammenbruch erfasst wird, er die Nachricht an die zugehörigen Knoten des Verknüpfungssegments durch den Zugangsport weiterleitet, falls er keine MAC-Adresse-Aktualisierungsnachricht vor dem Erfassen des Verknüpfungszusammenbruchs empfängt, er die Nachricht an die Knoten des Master-Rings oder des Verknüpfungssegments auf der höheren Stufe und auch an die zugehörigen Knoten des Verknüpfungssegments durch den Zugangsport weiterleitet.

7. Verfahren gemäß Anspruch 1, wobei:
nachdem der Master-Knoten des Verknüpfungssegments einen Zusammenbruch oder
eine Erholung des Zusammenbruchs seines Verknüpfungssegments erfasst, er eine MAC-Adresse-Aktualisierungsnachricht an den Master-Ring oder das Verknüpfungssegment auf der höheren Stufe sendet, und die Nachricht von dem Border-Port weitergeleitet wird, um eine schnelle Schutzumschaltung des entsprechenden Slave-Rings durchzuführen; nachdem der Border-Knoten einen Zusammenbruch oder eine Erholung des Zusammenbruchs seines Verknüpfungssegments erfasst, er die MAC-Adresse-Aktualisierungsnachricht direkt an den Master-Ring oder das Verknüpfungssegment auf der höheren Stufe sendet, um eine schnelle Schutzumschaltung des entsprechenden Slave-Rings durchzuführen.

8. Verfahren gemäß Anspruch 3, wobei:
der Prozess der Schutzumschaltung, wenn sich das Verknüpfungssegment von dem Zusammenbruch erholt, wie folgt ist: nachdem der Master-Knoten des Verknüpfungssegments erfasst, dass sich das gleichgemachte Verknüpfungssegment von dem Zusammenbruch erholt, blockiert er die Weiterleitungsfähigkeit des entsprechenden Service-VLAN des Slave-Ports, und wenn der Master-Knoten kein Border-Kontroll-Knoten ist, wird die obige Adressenaktualisierungsnachricht von dem Master-Port und dem Slave-Port an die Knoten des Master-Rings oder des Verknüpfungssegments auf der höheren Stufe durch das Weiterleiten durch den Border-Hilfsknoten gesendet; wenn der Master-Knoten ein Border-Kontroll-Knoten ist,
er die Adressenaktualisierungsnachricht an das Verknüpfungssegment durch den Zugangsport und auch an die Knoten des Master-Rings oder des Verknüpfungssegments auf der höheren Stufe sendet; nach dem Empfangen der MAC-Adresse-Aktualisierungsnachricht aktualisieren die anderen Knoten des Verknüpfungssegments sowie die Knoten des Master-Rings oder des Verknüpfungssegments auf der höheren Stufe die MAC-Adresstabellen und
implementieren eine Service-Schutzumschaltung gemäß der aktualisierten Adresstabelle.

9. Verfahren gemäß Anspruch 8, wobei:
wenn sich das Verknüpfungssegment von dem Zusammenbruch erholt, der Border-Hilfsknoten, falls der Border-Hilfsknoten die Adressenaktualisierungsnachricht von einer geteilten Verknüpfung empfängt, bevor die von dem Master-Knoten durch das Verknüpfungssegment gesendete Adressenaktualisierungsnachricht empfangen wird,
die Nachricht an die Knoten des Verknüpfungssegments durch seinen Zugangsport anstatt an die Knoten des Master-Rings oder des Verknüpfungssegments auf der höheren Stufe weiterleitet, das heißt, die Nachricht hat den Ring verlassen.

10. Ein automatisches Ethernet-Schutzsystem, beinhaltend eine Kontrolldomäne, die aus mehreren Ring-Knoten besteht, die ein identisches Service-VLAN unterstützen und ein identisches Kontroll-VLAN verwenden, wobei eine Möglichkeit besteht, dass mehrere physikalische Ringe in der Kontrolldomäne tangential sind, und die Kontrolldomäne eine hierarchische Struktur ist, **dadurch gekennzeichnet, dass** einer der physikalischen Ringe als ein Master-Ring einer höchsten Stufe angegeben wird und andere physikalische Ringe auf gleichgemachte Verknüpfungssegmente ohne mit dem Master-Ring oder dem Verknüpfungssegment ihrer höheren Stufe verbundene geteilte Verknüpfungen degradiert werden und jedes Verknüpfungssegment Border-Nodes beinhaltet, die von dem Master-Ring oder den Verknüpfungssegmenten auf einer höheren Stufe und den nicht geteilten Teilen geteilt werden, der Master-Ring und jedes Verknüpfungssegment einen Master-Knoten aufweisen, während andere Knoten Übertragungsknoten sind, wobei:
der Master-Knoten des Master-Rings angepasst ist, um für die Strategie und Kontrolle des Master-Rings verantwortlich zu sein, einschließlich Erfassen der Zustände von Verknüpfungen in dem Master-Ring, Weiterleiten einer MAC-Adresse-Aktualisierungsnachricht an Übertragungsknoten des Master-Rings und Service-Umschalten, wenn der Master-Ring zusammenbricht oder sich von einem Zusammenbruch erholt;
die Übertragungsknoten des Master-Rings angepasst sind, um den Master-Knoten des Master-Rings beim Erfassen eines Zustands des Rings und Service-Umschalten unter der Kontrolle des Master-Knotens zu unterstützen;
der Master-Knoten des Verknüpfungssegments angepasst ist, um für die Strategie und
Kontrolle des Verknüpfungssegments verantwortlich zu sein, einschließlich Erfassen eines Zustands des Verknüpfungssegments, Weiterleiten einer MAC-Adresse-Aktualisierungsnachricht an Übertragungsknoten des Verknüpfungssegments und
Service-Umschalten, wenn das Verknüpfungssegment zusammenbricht oder sich von einem Zusammenbruch erholt;
die Übertragungsknoten des Verknüpfungssegments angepasst sind, um den Master-Knoten des Verknüpfungssegments beim Erfassen des Zustands des Rings und
Service-Umschalten unter der Kontrolle des Master-Knotens zu unterstützen;
die Border-Knoten angepasst sind, um den Master-Knoten des Verknüpfungssegments beim Erfassen des Zustands des Verknüpfungssegments und Weiterleiten einer MAC-Adresse-Aktualisierungsnachricht des Verknüpfungssegments und der Verknüpfungssegmente auf niedrigeren Stufen an die Knoten des Master-Rings oder
die der Verknüpfungssegmente auf der höheren Stufe zu unterstützen;
nach dem Empfangen der MAC-Adresse-Aktualisierungsnachricht, die Knoten des Master-Rings und des Verknüpfungssegments angepasst sind, um die MAC-Adresstabelle zu aktualisieren und eine Service-Schutzumschaltung gemäß der aktualisierten Adresstabelle zu implementieren.

11. System gemäß Anspruch 10, wobei:
die Border-Knoten angepasst sind, um zwei Ports in dem Master-Ring oder dem Verknüpfungssegment auf der höheren Stufe als den Master-Knoten oder die Übertragungsknoten des Master-Rings oder des Verknüpfungssegments auf der höheren Stufe zu konfigurieren; und währenddessen einen Zugangsport in dem Verknüpfungssegment auf einer Zugangsstufe als einen Master-Knoten oder einen Übertragungsknoten des Verknüpfungssegments konfigurieren, und wobei der Zugangsport beim Dienen als der Master-Knoten des Verknüpfungssegments als ein Border-Kontroll-Knoten bezeichnet wird; und während er beim Dienen als der Übertragungsknoten des Verknüpfungssegments als ein Border-Hilfsknoten bezeichnet wird.

12. System gemäß Anspruch 11, wobei:
der Master-Knoten und die Übertragungsknoten des Master-Rings angepasst sind, um miteinander zu kooperieren, um die Zustände der Verknüpfungen in dem Master-Ring mit einem Alarmmodus zum Empfangen eines Zusammenbruchalarms von anderen Knoten und einem Abfragemodus zum aktiven Senden einer Erfassungsnachricht zu erfassen;
der Master-Knoten und die Übertragungsknoten in dem Verknüpfungssegment angepasst sind, um miteinander zu kooperieren, um die Zustände der Verknüpfungen des Master-Rings mit dem Alarmmodus zum Empfangen eines Zusammenbruchalarms von anderen Knoten und dem Abfragemodus zum aktiven Senden einer Erfassungsnachricht zu erfassen;
wenn der Master-Knoten des Verknüpfungssegments kein Border-Kontroll-Knoten ist,
er angepasst ist, um die Weiterleitungsfähigkeit des Service-VLAN des Slave-Ports, d. h. Zugangsports, zu blockieren und periodisch eine Hallo-Nachricht von einem Master-Port bzw. einem Slave-Port zu senden, wobei die Hallo-Nachricht durch das Weiterleiten durch die Übertragungsknoten an den Border-Hilfsknoten weitergeleitet wird und der Border-Hilfsknoten angepasst ist, um die Nachricht durch den Zugangsport an den entsprechenden Master-Port und Slave-Port des Master-Knotens zurückzusenden, und falls die Hallo-Nachricht an dem Port eine Zeitbegrenzung überschritten hat, die Verknüpfung als zusammengebrochen angesehen wird;
wenn der Master-Knoten ein Border-Kontroll-Knoten ist, er angepasst ist, um die Weiterleitungsfähigkeit des Service-VLAN des Slave-Ports zu blockieren und periodisch eine Hallo-Nachricht von dem Zugangsport zu senden, und wobei die Hallo-Nachricht durch das Weiterleiten durch den Übertragungsknoten an den Border-Hilfsknoten auf einer anderen Seite weitergeleitet wird und der Border-Hilfsknoten angepasst ist, um die Nachricht durch den Zugangsport an den Zugangsport der Border-Kontrolle zurückzusenden, und falls die Hallo-Nachricht an dem Port eine Zeitbegrenzung überschritten hat, die Verknüpfung als zusammengebrochen angesehen wird.

13. System gemäß Anspruch 11, wobei:
wenn der Master-Knoten des Verknüpfungssegments kein Border-Kontroll-Knoten ist,
er angepasst ist, um eine MAC-Adresse-Aktualisierungsnachricht an die anderen Knoten des Verknüpfungssegments auf der Seite, an dem er sich befindet, zu senden,
nachdem ein Verknüpfungszusammenbruch erfasst wird; wenn der Master-Knoten des Verknüpfungssegments ein Border-Kontroll-Knoten ist, er angepasst ist, um eine MAC-Adresse-Aktualisierungsnachricht durch den Zugangsport an das Verknüpfungssegment zu senden, und an die Knoten des Master-Rings oder die des Verknüpfungssegments auf der höheren Stufe nach dem Erfassen des Verknüpfungszusammenbruchs;
falls sich der Border-Hilfsknoten auf derselben Seite wie der Master-Knoten befindet,
wenn das Verknüpfungssegment zusammenbricht, er angepasst ist, um die Nachricht an die Knoten des Master-Rings oder die des Verknüpfungssegments auf der höheren Stufe weiterzuleiten; falls sich der Border-Hilfsknoten nicht auf derselben Seite wie der Master-Knoten befindet, er angepasst ist, um die MAC-Adresse-Aktualisierungsnachricht an die Knoten auf der Seite des Verknüpfungssegments durch den Zugangsknoten zu senden;
nach dem Empfangen der MAC-Adresse-Aktualisierungsnachricht, die zugehörigen Knoten des Verknüpfungssegments, des Master-Rings oder des Verknüpfungssegments auf der höheren Stufe angepasst sind, um die MAC-Adresstabellen zu senden aktualisieren und eine Service-Schutzumschaltung gemäß der aktualisierten Adresstabelle zu implementieren.

14. System gemäß Anspruch 11, wobei:
der Border-Hilfsknoten angepasst ist, um eine Zusammenbruchalarmnachricht zu verarbeiten und zu beurteilen, ob die Hallo-Nachricht eine Zeitbegrenzung überschritten hat oder nicht, und um als ein temporärer Master-Knoten verwendet zu werden, der angepasst ist, um den Verbindungszusammenbruch zu erfassen; falls der Border-Hilfskonten eine MAC-Adresse-Aktualisierungsnachricht empfängt, gesendet von den Knoten des Verknüpfungssegments durch den Zugangsport vor dem Erfassen eines Verknüpfungszusammenbruchs, er angepasst ist, um die Nachricht an die Knoten des Master-Rings oder die des Verknüpfungssegments auf der höheren Stufe weiterzuleiten,
falls er eine MAC-Adresse-Aktualisierungsnachricht empfängt, gesendet von einem anderen Border-Node des Verknüpfungssegments, an dem er sich befindet, bevor ein Verknüpfungszusammenbruch erfasst wird, er angepasst ist, um die Nachricht an die zugehörigen Knoten des Verknüpfungssegments durch den Zugangsport weiterzuleiten,
falls er vor dem Erfassen eines Verknüpfungszusammenbruchs keine MAC-Adresse-Aktualisierungsnachricht empfängt, er angepasst ist, um die Nachricht an die Knoten des Master-Rings oder die des Verknüpfungssegments auf der höheren Stufe und auch an die zugehörigen Knoten des Verknüpfungssegments durch den Zugangsport weiterzuleiten.

15. System gemäß Anspruch 11, wobei:
nachdem der Master-Knoten des Verknüpfungssegments erfasst, dass sich das gleichgemachte Verknüpfungssegment von dem Zusammenbruch erholt, er angepasst ist, um die Weiterleitungsfähigkeit des entsprechenden Service-VLAN des Slave-Ports zu blockieren, und falls der Master-Knoten kein Border-Kontroll-Knoten ist, die obige Adressenaktualisierungsnachricht von dem Master-Port und dem Slave-Port gesendet wird; falls der Master-Knoten ein Border-Kontroll-Knoten ist, er angepasst ist, um die Adressenaktualisierungsnachricht an das Verknüpfungssegment durch den Zugangsport und auch an die Knoten des Master-Rings oder die des Verknüpfungssegments auf der höheren Stufe zu senden.

## Revendications

1. Une méthode de protection automatique Ethernet, dans laquelle il y a plusieurs anneaux physiques tangents dans un domaine de contrôle, le domaine de contrôle est d'abord décomposé en une structure hiérarchique, **caractérisée en ce que** l'un des anneaux physiques est indiqué comme un anneau maître d'un niveau le plus élevé et d'autres anneaux physiques sont dégradés pour être des segments de liaison nivelés sans liaisons partagées connectés à l'anneau maître ou au segment de liaison de leur niveau supérieur, et un noeud maître et plusieurs noeuds de transmission sont configurés à la fois pour l'anneau maître et pour chaque segment de liaison, tandis que des noeuds connectant l'anneau maître et le segment de liaison ou connectant des segments de liaison de différents niveaux sont configurés comme des noeuds frontière ; la méthode comprend :
le fait que le noeud maître et les noeuds de transmission de l'anneau maître coopèrent les uns avec les autres pour détecter des états de liaisons dans l'anneau maître et
effectuer une commutation de services lors d'une défaillance ou d'une récupération suite à une défaillance de l'anneau maître, un message de mise à jour d'adresses MAC étant transféré du noeud maître aux noeuds de transmission de l'anneau maître ;
le fait que le noeud maître et les noeuds de transmission de chaque segment de liaison coopèrent les uns avec les autres pour détecter un état du segment de liaison et
effectuer une commutation de services lors d'une défaillance ou d'une récupération suite à une défaillance du segment de liaison au niveau en question, un message de mise à jour d'adresses MAC étant transféré du noeud maître aux noeuds de transmission du segment de liaison ;
le fait que les noeuds frontière aident le noeud maître du segment de liaison à détecter l'état du segment de liaison et transférer le message de mise à jour d'adresses MAC de ce segment de liaison aux noeuds de l'anneau maître ou à ceux du segment de liaison au niveau supérieur ;
le fait que les noeuds apparentés de l'anneau maître ou ceux du segment de liaison mettent à jour le tableau d'adresses MAC et exécutent la commutation de protection de services suivant le tableau d'adresses mis à jour.

2. La méthode de la revendication 1, dans laquelle :
ledit domaine de contrôle présente plusieurs noeuds d'anneau supportant le même VLAN de service et utilise le même VLAN de contrôle, ledit segment de liaison présente les noeuds frontière qui partagent des liaisons avec l'anneau maître ou le segment de liaison à un niveau supérieur et des parties non partagées.

3. La méthode de la revendication 1, dans laquelle :
lors de la configuration des noeuds frontière, deux ports sont configurés sur l'anneau maître ou le segment de liaison au niveau supérieur comme le noeud maître ou les noeuds de transmission de l'anneau maître ou du segment de liaison au niveau supérieur ; un port d'accès est configuré sur le segment de liaison à un niveau d'accès comme le noeud maître ou le noeud de transmission du segment de liaison, et est appelé noeud frontière de contrôle lorsqu'il sert de noeud maître du segment de liaison ;
tandis qu'il est appelé noeud frontière auxiliaire lorsqu'il sert de noeud de transmission du segment de liaison ; lorsqu'au moins un noeud frontière du segment de liaison reçoit un message de mise à jour d'adresses MAC envoyé par d'autres noeuds du segment de liaison, ledit au moins un noeud frontière transfère le message de mise à jour d'adresses à un noeud de l'anneau maître ou du segment de liaison au niveau supérieur.

4. La méthode de la revendication 1, dans laquelle :
le processus de commutation de services lors d'une défaillance de l'anneau maître est comme suit : le noeud maître de l'anneau maître débloque une capacité de transfert du VLAN de service de son port esclave lorsqu'il détecte une défaillance de la liaison de l'anneau maître, envoie un message de mise à jour d'adresses MAC, lequel est transféré uniquement dans l'anneau maître, du port maître et du port esclave et met à jour le tableau d'adresses MAC des noeuds apparentés de l'anneau maître, et les noeuds apparentés exécutent la commutation de protection de services suivant le tableau d'adresses mis à jour ;
le processus de commutation de services lors d'une récupération suite à la défaillance de l'anneau maître est comme suit : le noeud maître de l'anneau maître bloque une capacité de transfert du VLAN de service de son port esclave lorsqu'il détecte une défaillance de la liaison de l'anneau maître, envoie un message de mise à jour d'adresses MAC, lequel est transféré uniquement dans l'anneau maître, du port maître et du port esclave et met à jour le tableau d'adresses MAC des noeuds apparentés de l'anneau maître, et les noeuds exécutent la commutation de protection de services suivant l'adresse mise à jour, où la récupération suite à la défaillance de la liaison de l'anneau maître détectée par le noeud maître de l'anneau maître comprend le fait que le port esclave re-reçoive un message hello du port maître.

5. La méthode de la revendication 3, dans laquelle le processus de commutation de services lors d'une défaillance du segment de liaison est comme suit :
lorsque le noeud maître du segment de liaison n'est pas un noeud frontière de contrôle,
il envoie un message de mise à jour d'adresses MAC à d'autres noeuds du segment de liaison sur un côté où il est situé, et les noeuds frontière auxiliaires sur le côté transfèrent le message aux noeuds de l'anneau maître ou du segment de liaison au niveau supérieur ;
lorsque le noeud maître du segment de liaison est un noeud frontière de contrôle, il envoie un message de mise à jour d'adresses MAC au segment de liaison via le port d'accès ainsi qu'aux noeuds de l'anneau maître ou du segment de liaison au niveau supérieur ;
les noeuds frontière auxiliaires sur l'autre côté du segment de liaison envoient le message de mise à jour d'adresses MAC aux noeuds sur le côté du segment de liaison via le port d'accès ; après la réception du message de mise à jour d'adresses MAC, les noeuds apparentés dudit segment de liaison, de l'anneau maître ou du segment de liaison au niveau supérieur mettent à jour le tableau d'adresses MAC et exécutent la commutation de protection de services suivant le tableau d'adresses mis à jour.

6. La méthode de la revendication 5, dans laquelle :
ledit noeud frontière auxiliaire reçoit un message de mise à jour d'adresses MAC envoyé par le noeud du segment de liaison via le port d'accès avant de détecter une défaillance de liaison, il transfère le message aux noeuds de l'anneau maître ou du segment de liaison au niveau supérieur, s'il reçoit un message de mise à jour d'adresses MAC envoyé par un autre noeud frontière du segment de liaison où il est situé avant de détecter une défaillance de liaison, il transfère le message aux noeuds apparentés du segment de liaison via le port d'accès, s'il ne reçoit pas de message de mise à jour d'adresses MAC avant de détecter une défaillance de liaison, il transfère le message aux noeuds de l'anneau maître ou du segment de liaison au niveau supérieur, ainsi qu'aux noeuds apparentés du segment de liaison via le port d'accès.

7. La méthode de la revendication 1, dans laquelle :
après que le noeud maître du segment de liaison a détecté une défaillance ou une récupération suite à une défaillance de son segment de liaison, il envoie un message de mise à jour d'adresses MAC à l'anneau maître ou au segment de liaison au niveau supérieur, et le message est transféré par le port frontière afin d'effectuer une commutation rapide de protection de l'anneau esclave correspondant ; après que ledit noeud frontière a détecté une défaillance ou une récupération suite à une défaillance de son segment de liaison, il envoie directement le message de mise à jour d'adresses MAC à l'anneau maître ou au segment de liaison au niveau supérieur afin d'effectuer une commutation rapide de protection de l'anneau esclave correspondant.

8. La méthode de la revendication 3, dans laquelle :
le processus de commutation de services lorsque le segment de liaison récupère suite à la défaillance est comme suit : après que le noeud maître du segment de liaison a détecté une récupération du segment de liaison nivelé suite à la défaillance, il bloque la capacité de transfert du VLAN de service correspondant du port esclave, et lorsque le noeud maître n'est pas un noeud frontière de contrôle, le message de mise à jour d'adresses ci-dessus est envoyé du port maître et du port esclave aux noeuds de l'anneau maître ou du segment de liaison au niveau supérieur via le transfert par le noeud frontière auxiliaire ; lorsque ledit noeud maître est un noeud frontière de contrôle,
il envoie le message de mise à jour d'adresses au segment de liaison via le port d'accès ainsi qu'aux noeuds de l'anneau maître ou du segment de liaison au niveau supérieur ; après la réception du message de mise à jour d'adresses MAC, les autres noeuds du segment de liaison de même que les noeuds de l'anneau maître ou du segment de liaison au niveau supérieur mettent à jour les tableaux d'adresses MAC et
exécutent une commutation de protection de services suivant le tableau d'adresses mis à jour.

9. La méthode de la revendication 8, dans laquelle :
lorsque le segment de liaison récupère suite à la défaillance, si le noeud frontière auxiliaire reçoit le message de mise à jour d'adresses d'une liaison partagée avant de recevoir le message de mise à jour d'adresses envoyé par le noeud maître via le segment de liaison, le noeud frontière auxiliaire transfère le message aux noeuds du segment de liaison via son port d'accès plutôt qu'aux noeuds de l'anneau maître ou du segment de liaison au niveau supérieur, c'est-à-dire que le message part de l'anneau.

10. Un système de protection automatique Ethernet comprenant un domaine de contrôle constitué de plusieurs noeuds d'anneau qui supportent un même VLAN de service et utilisant un même VLAN de contrôle, dans lequel il y a une possibilité que plusieurs anneaux physiques soient tangents dans le domaine de contrôle, et le domaine de contrôle est une structure hiérarchique, **caractérisée en ce que** l'un des anneaux physiques est indiqué comme un anneau maître d'un niveau le plus élevé et d'autres anneaux physiques sont dégradés pour être des segments de liaison nivelés sans liaisons partagées connectés à l'anneau maître ou au segment de liaison de leur niveau supérieur, et chaque segment de liaison comprend des noeuds frontière qui sont partagés par l'anneau maître ou les segments de liaison à un niveau supérieur et les parties non partagées, l'anneau maître et chaque segment de liaison ont un noeud maître, tandis que d'autres noeuds sont des noeuds de transmission, dans lequel :
ledit noeud maître de l'anneau maître est conçu pour être responsable de la stratégie et
du contrôle de l'anneau maître, y compris de la détection d'états de liaisons dans l'anneau maître, du transfert d'un message de mise à jour d'adresses MAC à des noeuds de transmission de l'anneau maître et de la commutation de services lors d'une défaillance ou d'une récupération suite à une défaillance de l'anneau maître ;
lesdits noeuds de transmission de l'anneau maître sont conçus pour aider le noeud maître de l'anneau maître à détecter un état de l'anneau et à commuter de services sous le contrôle du noeud maître ;
ledit noeud maître du segment de liaison est conçu pour être responsable de la stratégie et du contrôle du segment de liaison, y compris de la détection d'un état du segment de liaison, du transfert d'un message de mise à jour d'adresses MAC à des noeuds de transmission du segment de liaison et de la commutation de services lors d'une défaillance ou d'une récupération suite à une défaillance du segment de liaison ;
lesdits noeuds de transmission du segment de liaison sont conçus pour aider le noeud maître du segment de liaison à détecter l'état de l'anneau et à commuter de services sous le contrôle du noeud maître ;
lesdits noeuds frontière sont conçus pour aider le noeud maître du segment de liaison à détecter l'état du segment de liaison et à transférer un message de mise à jour d'adresses MAC du segment de liaison et des segments de liaison à des niveaux inférieurs aux noeuds de l'anneau maître ou à ceux des segments de liaison au niveau supérieur ;
après la réception du message de mise à jour d'adresses MAC, les noeuds de l'anneau maître et du segment de liaison sont conçus pour mettre à jour le tableau d'adresses MAC et exécuter la commutation de protection de services suivant le tableau d'adresses mis à jour.

11. Le système de la revendication 10, dans lequel :
lesdits noeuds frontière sont conçus pour configurer deux ports dans l'anneau maître ou
le segment de liaison au niveau supérieur comme le noeud maître ou les noeuds de transmission de l'anneau maître ou du segment de liaison au niveau supérieur ; et
configurer entre-temps un port d'accès dans le segment de liaison à un niveau d'accès comme un noeud maître ou un noeud de transmission du segment de liaison et le port d'accès est appelé noeud frontière de contrôle lorsqu'il sert de noeud maître du segment de liaison ; et tandis qu'il est appelé noeud frontière auxiliaire lorsqu'il sert de noeud de transmission du segment de liaison.

12. Le système de la revendication 11, dans lequel :
ledit noeud maître et les noeuds de transmission de l'anneau maître sont conçus pour coopérer les uns avec les autres afin de détecter les états des liaisons dans l'anneau maître avec un mode alerte consistant à recevoir une alerte de défaillance d'autres noeuds et un mode échantillon consistant à activement envoyer un message de détection ;
ledit noeud maître et les noeuds de transmission dans le segment de liaison sont conçus pour coopérer les uns avec les autres afin de détecter les états des liaisons de l'anneau maître avec le mode alerte consistant à recevoir une alerte de défaillance d'autres noeuds et le mode échantillon consistant à activement envoyer un message de détection ;
lorsque le noeud maître du segment de liaison n'est pas un noeud frontière de contrôle,
il est conçu pour bloquer la capacité de transfert du VLAN de service du port esclave, c.-à-d. du port d'accès, et envoyer périodiquement un message hello d'un port maître et d'un port esclave respectivement, le message hello est transféré au noeud frontière auxiliaire via le transfert par les noeuds de transmission, et le noeud frontière auxiliaire est conçu pour renvoyer le message au port maître et au port esclave correspondants du noeud maître via le port d'accès, et si le message hello au niveau du port a dépassé le temps qui lui était imparti, il est considéré que la liaison présente une défaillance ;
lorsque le noeud maître est un noeud frontière de contrôle, il est conçu pour bloquer la capacité de transfert du VLAN de service du port esclave et envoyer périodiquement un message hello du port d'accès, et le message hello est transféré au noeud frontière auxiliaire sur un autre côté via le transfert par le noeud de transmission, et le noeud frontière auxiliaire est conçu pour renvoyer le message au port d'accès du frontière de contrôle via le port d'accès, et si le message hello au niveau du port a dépassé le temps qui lui était imparti, il est considéré que la liaison présente une défaillance.

13. Le système de la revendication 11, dans lequel :
lorsque le noeud maître du segment de liaison n'est pas un noeud frontière de contrôle,
il est conçu pour envoyer un message de mise à jour d'adresses MAC à d'autres noeuds du segment de liaison sur le côté où il est situé après la détection d'une défaillance de liaison ; lorsque le noeud maître du segment de liaison est un noeud frontière de contrôle, il est conçu pour envoyer un message de mise à jour d'adresses MAC au segment de liaison via le port d'accès, et aux noeuds de l'anneau maître ou à ceux du segment de liaison au niveau supérieur après la détection de la défaillance de liaison ;
si le noeud frontière auxiliaire est sur le même côté que le noeud maître lors de la défaillance du segment de liaison, il est conçu pour transférer le message aux noeuds de l'anneau maître ou à ceux du segment de liaison au niveau supérieur ; si le noeud frontière auxiliaire n'est pas sur le même côté que le noeud maître, il est conçu pour envoyer le message de mise à jour d'adresses MAC aux noeuds sur le côté du segment de liaison via le port d'accès ;
après la réception du message de mise à jour d'adresses MAC, les noeuds apparentés dudit segment de liaison, de l'anneau maître ou du segment de liaison au niveau supérieur sont conçus pour envoyer mettre à jour les tableaux d'adresses MAC et
exécuter la commutation de protection de services suivant le tableau d'adresses mis à jour.

14. Le système de la revendication 11, dans lequel :
ledit noeud frontière auxiliaire est conçu pour traiter un message d'alerte de défaillance et juger si le message hello a dépassé ou non le temps qui lui était imparti, et pour être utilisé comme un noeud maître temporaire conçu pour détecter la défaillance de liaison ;
si ledit noeud frontière auxiliaire reçoit un message de mise à jour d'adresses MAC envoyé par les noeuds du segment de liaison via le port d'accès avant de détecter une défaillance de liaison, il est conçu pour transférer le message aux noeuds de l'anneau maître ou à ceux du segment de liaison au niveau supérieur, s'il reçoit un message de mise à jour d'adresses MAC envoyé par un autre noeud frontière du segment de liaison où il est situé avant de détecter une défaillance de liaison, il est conçu pour transférer le message aux noeuds apparentés du segment de liaison via le port d'accès, s'il ne reçoit pas de message de mise à jour d'adresses MAC avant de détecter une défaillance de liaison, il est conçu pour transférer le message aux noeuds de l'anneau maître ou à ceux du segment de liaison au niveau supérieur, ainsi qu'aux noeuds apparentés du segment de liaison via le port d'accès.

15. Le système de la revendication 11, dans lequel :
après que le noeud maître du segment de liaison a détecté une récupération du segment de liaison nivelé suite à la défaillance, il est conçu pour bloquer la capacité de transfert du VLAN de service correspondant du port esclave, et si le noeud maître n'est pas un noeud frontière de contrôle, le message de mise à jour d'adresses ci-dessus est envoyé du port maître et du port esclave ; si ledit noeud maître est un noeud frontière de contrôle, il est conçu pour envoyer le message de mise à jour d'adresses au segment de liaison via le port d'accès ainsi qu'aux noeuds de l'anneau maître ou à ceux du segment de liaison au niveau supérieur.
